# EUROPEAN PATENT APPLICATION

(11) **EP 4 336 400 A1**
(43) Date of publication of application: **13.03.2024**
(21) Application number: 22194877.1
(22) Date of filing: 09.09.2022
(51) Int. Cl.: G06F 40/279

(54) **TIMESTAMP RECOGNITION FROM UNSTRUCTURED TEXT STRINGS**

(71) Applicant: Utopia Music AG, 6300 Zug (CH)
(72) Inventor: Levén, William, 6300 Zug (CH); Woge, Jan-Felix, 6300 Zug (CH); Wallisson, Sandrine, 6300 Zug (CH)
(74) Representative: MERH-IP Matias Erny Reichl Hoffmann Patentanwälte PartG mbB

(57) **Abstract**

According to an aspect, there is provided a computer-implemented method comprising the following. At least one sample timestamp is obtained. A plurality of sets of timestamps are generated by varying both a timestamp format and a datetime value of the at least one sample timestamp. Each set of the plurality of sets of timestamps has a different timestamp format and comprises timestamps corresponding to a plurality of different datetime values. A plurality of regular expressions are generated based on the plurality of sets of timestamps. Unstructured text data is obtained and, based thereon, one or more timestamps are identified from the unstructured text data by searching for matches to the plurality of regular expressions.

## Description

### TECHNICAL FIELD

The embodiments relate to identification of timestamps from unstructured text data.

### BACKGROUND

Timestamps are commonly used in a variety of different applications and use cases for attaching digital date and time information to a piece of digital data. For example, computer files comprise timestamps indicating when the file was created and/or last modified and log data relating, e.g., to a computing device or system typically comprises timestamps indicating when a particular event or activity occurred. A timestamp may be provided using one of a large number of different formats. When gathering information from a plurality of different data sources, identification of the timestamps from the data is often challenging due to the fact that each data source may potentially use a different timestamp format or multiple different timestamp formats.

### BRIEF DESCRIPTION OF THE EMBODIMENTS

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

### BRIEF DESCRIPTION OF THE DRAWINGS

In the following the embodiments will be described in greater detail by means of preferred embodiments with reference to the attached drawings, in which
Figure 1 illustrates a system to which embodiments may be applied; and
Figures 2 to 5 illustrate processes according to embodiments.

### DETAILED DESCRIPTION OF EMBODIMENTS

The invention and its embodiments are not limited to the examples described above but may vary within the scope of the claims.

Timestamps are commonly used in a variety of different applications and use cases for attaching digital date and time information to a piece of digital data. For example, computer files comprise timestamps indicating when the file was created and/or last modified and log data relating, e.g., to a computing device or system typically comprises timestamps indicating when a particular event or activity occurred. A timestamp may be provided using one of a large number of different formats which may comprise both standardized formats such as the ISO 8601 format and non-standardized -i.e., custom-formats. The different timestamp formats may differ from each other by, for example, the units of time included in the timestamp, the order of the units of time included in the timestamp, separator characters used in the timestamp format and whether month is given as a digit or text string. For example, the following timestamps may be defined for indicating substantially the same date and time: Satur 14-02-2010 6:00, 2005-02-14 T 6:00 UTC and Sat Feb 14 06:00:23 2010.

In many applications, data comprising timestamps needs to be gathered from multiple different data sources, e.g., from multiple different server or computing servers located in different parts of the world. Said different data sources may use multiple different standardized and/or custom timestamp format(s) using multiple languages. The timestamp formats used by the different data sources may not be known to the entity -e.g., a computing device- processing the data comprising the timestamps. This presents a serious challenge for automatic identification of the timestamps from the data, especially considering the fact that custom timestamps may have a large number of different forms.

The following non-limiting list of possible variations in the timestamp format outlines the scope of the challenge coming with the attempt to match close to 100% of all timestamps occurring in external unstructured data:
- A timestamp can vary in accuracy. Only a date or a date with time may be provided. Moreover, time may be given with hours and minutes or further enhanced by seconds, milliseconds, microseconds or even nanoseconds.
- A timestamp may or may not comprise time zone information. The time zone information, if included, may be given as a text string denoting an abbreviated or non-abbreviated name of the time zone (e.g., "CET" or "Central European Time", as one or more digits (e.g., "01") or a combination thereof (e.g., "+01:00" or "+01"). In some case, especially in aviation or military context, the name of the time zone may be given as a designation letter so that, for example, "UTC" is denoted simply as "Z". Also, the time zone name can be spelled out by international or local standard.
- A date of a timestamp may be ordered as big-endian in the sequence "year, month, day", little-endian as "day, month, year" or middle-endian as "month, day, year". Conventions may vary, e.g., from country to country.
- A date of a timestamp may be represented by various combinations of its basic components. For example, the year may be given with 2- or 4-digits (e.g., "22" or "2022"), the month may be given always with 2 digits using zero-padding (e.g., "09" for September and "10" for October) or with 1-2 digits without zero-padding (e.g., "9" for September and "10" for October), by an abbreviation (e.g., "Sep" or "Sept" for September), or fully spelled out (e.g., "September"). The same principles apply for the day of the week (given, e.g., as "5", "05", "Fri" or "Friday"), if included in the timestamp format in the first place. Many different separator characters or separator strings may be used for separating different units of time provided in the timestamp format. Typically separator characters comprise, e.g., dash ("-"), hyphen ("-"), dot ("."), slash ("/") and whitespace (" "). In some cases, some or all separator characters may be omitted such as in the timestamp "10011986". Finally, some timestamps may comprise an ordinal indicator next to the day of the month. The form of this ordinal indicator may depend on the day of the month, e.g., "January 1st, 1989" or "January 2nd, 1989".
- A time given the timestamp may be represented by various combinations of basic components as well. For example, either 24-hour or 12-hour clock representation may be employed. The latter alternative typically comes with abbreviations for ante/post meridiem which may have a plurality of different forms such as "4:15 p.m", "4:15p.m.", "4:15 pm", "4:15pm", "4:15 PM" and "4:15PM". Hours and minutes may, for example, be separated by a colon (":") or by the letter "h" (e.g., "16h15") as is common in French-speaking countries. Other characters may alternatively be used as the hour-minute separator character. Seconds, if included in the timestamp format, may be added with or without a delimiter, followed by fractions of seconds (timestamp accuracy mentioned above), typically delimited by dot (".") or comma (",").
- The timestamp may be provided in a plurality of different languages. The language may have an effect, for example, on included fully spelled out or abbreviated names of months and/or days of the week and/or ordinal indicators.

The following four example representations serve to further illustrate the point that there exists high variance in possible timestamp formats which makes universal timestamp detection very difficult:
"2022-08-31T14:05:00+02:00"
"08/31/22 2:05:00.000 PM CEST"
"mercredi 31 août 2022 a 14h05 heure d'été d'Europe centrale" and
"Mi, 31.8.22 14:05:00.000000000" and
"14:05 on the thirty first of August".

A particular non-limiting example of an application where identification of timestamps is of importance is tracking audio tracks played by online or Internet radio stations based on associated playlist text data. A playlist text data set created by an online radio station may comprise playlist text data for one or more audio tracks, i.e., it may comprise one or more audio consumption rows of unstructured data. Ideally, the playlist text data defined for a single audio track, e.g., for a song or other piece of music, in a playlist text data set of an online radio station comprises only information on the artist of the audio track and the title of the audio track. Any additional information included in the playlist text data for the audio track may be detrimental for any automated matching processes for trying to identify the audio track, e.g., by resolving the International Standard Recording Code (ISRC) and/or International Standard Musical Work Code (ISWC) of the audio track based on the playlist text data. In practice, a significant number of consumption rows may, however, comprise such unwanted additional data. Said unwanted additional data has been observed to correspond often to a timestamp having one of a plurality of timestamp formats. These timestamps should be identified and subsequently removed from the playlist text data to make it easier to automatically parse the artist and title information and, based thereon, to resolve the corresponding ISRC and ISWC of the audio track which is or was played by the online radio station.

Another particular non-limiting example of an application where identification of timestamps is of importance is identification of timestamps (i.e., times and/or dates) from articles such as historical papers or newspaper articles. An article may be defined here as a written work published in an electronic medium. Articles may be specifically online articles. Articles typically non-fictional prose though the embodiments are obviously not limited to non-fictional written works. The information on identified timestamps may be used for enabling efficient searching of timestamps from large collections of articles.

To overcome at least some of the aforementioned problems, the embodiments to be discussed below in detail, provide solutions for efficiently identifying timestamps of any timestamp format from unstructured text data and optionally depending on the particular application, removing said timestamps.

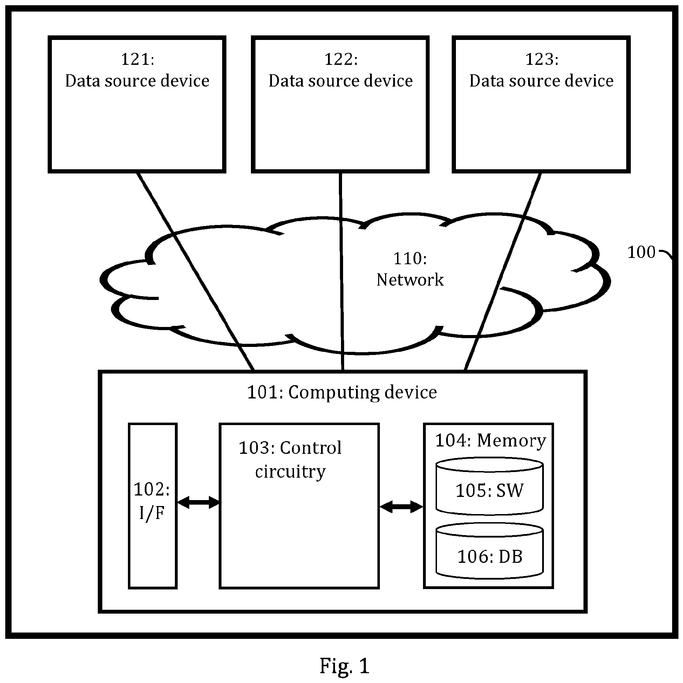

Figure 1 illustrates an architecture of a system 100 to which embodiments may be applied. Figure 1 illustrates a simplified system architecture only showing some elements and functional entities, all being logical units whose implementation may differ from what is shown. The connections shown in Figure 1 are logical connections; the actual physical connections may be different. It is apparent to a person skilled in the art that the system 100 may also comprise other functions and structures.

The system of Figure 1 comprises a computing device 101, a plurality of data source devices 121 to 123 and a communications network 110 providing a communication connection between the computing device 101 and the plurality of data source devices 121 to 123.

The computing device 101 may be configured to carry out at least identification of timestamps from unstructured text data received from the plurality of data source devices 121 to 123, as will be described below in detail. Optionally, the computing device 101 may also be configured to process the unstructured text data based on the identified timestamps, e.g., by removing the identified timestamp from the unstructured text data, and/or retrieving certain information based on the identified timestamps from an internal or external database of the computing device 101.

The computing device 101 refers to a portable or non-portable computing device also called hereinafter equipment or apparatus. Computing devices which may be employed include wireless mobile communication devices operating with or without a subscriber identification module (SIM) in hardware or in software, including, but not limited to, the following types of devices: desktop computer, laptop, touch screen computer, mobile phone, server computer, smart phone, personal digital assistant (PDA), handset, e-reading device, tablet, game console, note-book, multimedia device, sensor, actuator, video camera, car, wearable computer, telemetry appliances, and telemonitoring appliances. In a typical non-limiting embodiment, the computing device 101 may be a desktop computer, a laptop computer or a server computer.

The computing device 101 may further comprise any conventional software/hardware elements of a desktop computer, a laptop computer, a tablet computer or a smart phone for enabling a user to interact with the computing device 101. For example, the computing device 101 may comprise one or more user input devices - e.g., a keyboard, a mouse and/or a game controller -, a display, a touch screen which may act as both a user input device and a display, and/or one or more audio output devices such as a loudspeaker and/or headphones.

The computing device 101 comprises one or more control circuitry 103, such as at least one processor, and at least one memory 104, including one or more algorithms 105, such as a computer program code (software, SW), wherein the at least one memory 104 and the computer program code (software) are configured, with the at least one processor, to cause the computing device to carry out any one of the exemplified functionalities of the computing device to be described below. The processor 103 may be a central processing unit (CPU) of the computing device 101. The computing device 101 may also comprise one or more interfaces (I/F) 102.

The memory 104 of the computing device 101 may be implemented using any suitable data storage technology, such as semiconductor based memory devices, flash memory, magnetic memory devices and systems, optical memory devices and systems, fixed memory and removable memory. The memory 211 comprises at least one database (DB) 105 and software (SW) 106 (i.e., one or more algorithms).

The interfaces 102 of the computing device 101 may comprise, for example, one or more communication interfaces comprising hardware and/or software for realizing communication connectivity according to one or more communication protocols. Specifically, the one or more communication interfaces 102 may comprise, for example, at least one interface providing a connection to the one or more data source devices 121 to 123. The one or more communication interfaces 102 may enable a connection to the Internet. The one or more communication interfaces 102 may comprise standard well-known components such as an amplifier, filter, frequency-converter, (de)modulator, and encoder/decoder circuitries, controlled by the corresponding controlling units, and one or more antennas. The one or more communication interfaces 102 may also comprise at least one user interface.

The communications network 110 enabling communication between the computing device 101 and the plurality of data source device 102 to 104 may comprise one or more wireless networks and/or one or more wired networks. Said one or more wireless networks may be based on any mobile system, such as GSM, GPRS, LTE, 4G, 5G, 6G and beyond, and a wireless local or personal area network, such as Wi-Fi or Bluetooth. The communications network 110 may comprise the Internet. In some embodiments, the communications network 110 may be replaced with a wired or wireless communication link.

The plurality of data source devices 102 to 104 may be any computing devices for producing unstructured text data (e.g., strings) comprising timestamps. The plurality of data source device 102 to 104 may be configured to use partially and/or fully different timestamp format(s) relative to each other.

In some embodiments, the plurality of data source devices 102 to 104 may be or comprise computing device(s) associated with online radio stations. In such embodiments, the plurality of data source devices 102 to 104 may be configured to generate playlist text data as audio tracks are played by the online radio station. As described above, the playlist text data may comprise, for each audio track played by the online radio station, information on the artist of the audio track, the title of the audio track and, for at least some audio tracks, a timestamp of the audio track, i.e., when the audio track was played or when the playlist text data for the audio track was created.

In some alternative embodiments, only a single data source device may be provided in the system 100.

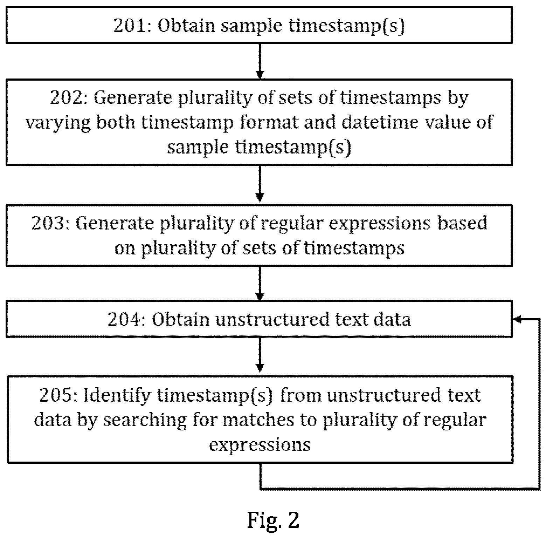

Figure 2 illustrates a process according to an embodiment for identifying timestamps. The illustrated process may be performed by a computing device such as the computing device 101 of Figure 1.

Referring to Figure 2, the computing device initially obtains, in block 201, at least one sample timestamp. Said at least one sample timestamp may have any timestamp format. If multiple sample timestamp format are obtained, said multiple sample timestamps may have the same or different timestamp formats. The at least one sample timestamp may be maintained in a memory of the computing device and obtained therefrom in block 201.

In some embodiments, the at least one timestamp - or at least one of them - may have a timestamp format defining at least one of the following units of time a year, a month of the year, a day of the month, an hour of the day, a minute of the hour and seconds of the minute. The units of time may be provided in any order when the timestamp format comprise more than one unit of time. In some cases, all of the listed units of time may be included in said at least one timestamp or in at least one of said at least one timestamp.

Thus, it will be well understood that a timestamp format may comprise either the date or the time, or both.

Additionally, the timestamp format may define pre-defined parts of a second, e.g., hundredths of a second or thousands of a second. In the following, example, the timestamp format may correspond to the timestamp 2000-01-01 01:00.00 defining, respectively, the year, the month of the year, the day of the month, the hour of the day, the minute of the hour and the second of the minute, where zero-padding may be used for any of the units of time.

The computing device generates, in block 202, a plurality of sets of timestamps by varying both a timestamp format and a datetime value of the at least one sample timestamp. Each set of the plurality of sets of timestamps has a different timestamp format and comprises timestamps corresponding to a plurality of different datetime values, i.e., a plurality of different values for the time and date. The plurality of sets of timestamps may comprise both standardized timestamp formats (e.g., ISO 8601 formats) and non-standardized (i.e., custom) timestamp formats.

The generating of the plurality of sets of timestamps in block 202 may be performed further based on at least one timestamp or datetime library supporting a plurality of timestamp formats and/or a plurality of localisations, i.e., a plurality of languages for timestamps. The term "library" as used here may be defined, in general, as a collection of non-volatile resources used by computer programs, often for software development. The timestamp or datetime library may be a built-in library of a programming language or a 3rd-party library. Luxon and Delorean are two examples of timestamp or datetime library which may be employed in block 202 for generating the plurality of sets of timestamps.

In some embodiments, the varying of the timestamp format of the at least one sample timestamp so as to implement the plurality of timestamp formats defined for the plurality of sets of timestamps in block 202 comprises varying one or more properties of the timestamp format selected from the following set of properties or a subset thereof:
- units of time (e.g., at least year, month of the year, day of the month, day of the week, hour of the day, minutes, second and fractions of a second) included in the timestamp format,
- accuracy of units of time included in the timestamp format (e.g., providing fractions of a second with milliseconds accuracy or nanosecond accuracy),
- relative order of different units of time included in the timestamp format,
- the number of separator characters for separating different units of time used in the timestamp format,
- types of separator character or characters used in the timestamp format,
- use of a 12-hour or 24-hour clock,
- use of zero padding for keeping the number of digits reserved for a particular unit of time constant,
- inclusion of a time zone notation in the timestamp format,
- a form of the time zone notation,
- inclusion of an ordinal indicator for a day of the month,
- indicating a month as one or more digits or as a text string,
- indicating a month as a text string for a name of the month or a text string for an abbreviated name of the month,
- indicating a year as one or more digits or as a text string,
- indicating a day of the week as one or more digits or as a text string,
- indicating a day of the week as a text string for a name of the day of the week (e.g., "Monday") or a text string for an abbreviated name of the day of the week (e.g., "Mon"),
- capitalization of text strings included in the timestamp format such as text strings indicating an ordinal indicator (e.g., "st" or "ST"), a month of the year (e.g., "dec", "Dec" or "DEC") and/or a day of the week (e.g., "Monday", "Monday" or "MONDAY") and
- language of the timestamp format.

In some embodiments, the varying of the timestamp format of the at least one sample timestamp so as to implement the plurality of timestamp formats defined for the plurality of sets of timestamps in block 202 may comprise varying all of the listed properties.

In some embodiments, the above list may also comprise inclusion of a week of a year notation in the timestamp format and/or a form of the week of the year notation included in the timestamp format.

Regarding the capitalization of text strings, the possible variations may comprise at least non-capitalized, fully capitalized and title case, i.e., only the first letter of each word capitalized.

It should be noted that the language of the timestamp format may affect many aspects of the timestamp format such as names of days of the week and/or the months of the year included as text strings in abbreviated or non-abbreviated form and/or the form of ordinal indicators and/or the form of the separator character or characters.

As described above, not only the timestamp format but also the datetime value, i.e., the date & time, of said at least one sample timestamp may be varied so as to generate the plurality of set of timestamps. Specifically, in some embodiments, the varying of the datetime value of the at least one sample timestamp so as to implement timestamps corresponding to the plurality of different datetime values in block 202 comprises at least
1) varying a number of digits usable for denoting each non-zero-padded digit-based unit of time defined in a timestamp format and/or
2) varying any variable, i.e., non-constant, text strings includable in a timestamp format.

Regarding alternative 1, varying the number of digits usable for denoting each non-zero-padded digit-based unit of time is important in order to generate timestamps which capture all possible variations in terms of number of digits which may be included in timestamps of a given timestamp format. If zero-padding is not used for a given unit of time, the number of digits usable for that unit of time may vary. For example, the month of the year, if given with digits, may be given using one digit for the first nine months (e.g., "1" for January) or using two digits for the last three months ("12" for December).

In some embodiments, the non-zero-padded digit-based units of time with variable number of digits includable in a time stamp format, as used in block 202 for a set of timestamps, may comprise all or some of the following:
- pre-defined subdivisions or fractions of a second defined using one or more digits (e.g., deciseconds, centiseconds, milliseconds, microseconds or nanoseconds),
- seconds of a minute defined using one to two digits (e.g., "1" or "32"),
- minutes of an hour defined using one to two digits (e.g., "1" or "32"),
- hours of a day using a 12-hour or 24-hour clock defined using one to two digits (e.g., "1" or "11"),
- a day of a month defined using one to two digits (e.g., "1" or "25"),
- a month of a year defined using one to two digits (e.g., "1" or "11"), and
- a year defined using one to four digits (e.g., "5", "68", "145" or "2022").

Regarding alternative 2, it should be noted that a given timestamp format may contain constant text strings or individual characters such as separator characters, e.g., "-", ":", "the" and "of", and/or variable text strings defined as any text string which is not constant over all possible timestamps definable using a given timestamp format, i.e., which is not included in the same form in all possible timestamps definable using a given timestamp format. In other words, the variable text strings have a form which varies depending on the time and date. Such variable text strings comprise, for example, the names or abbreviated names of months of the year, e.g., "January", "February", ..., "December" or "Jan", "Feb"..., "Dec". Varying any variable text strings or contents thereof includable in a timestamp format is important in order to generate timestamps which capture all possible variations of text strings includable in a timestamp of a given timestamp format.

In some embodiments, the variable text strings includable within a timestamp format used in block 202 for a set of timestamps, comprise all or some of the following:
- text strings corresponding to ante meridiem, a.m., and post meridiem, p.m., indications of a 12-hour clock (e.g., "am" and "pm" or "a.m." and "p.m."),
- text strings denoting names and/or abbreviated names of months (e.g., "January", "February", ..., "December" or "Jan", "Feb",..., "Dec"),
- text strings denoting names and/or abbreviated names of days of a week (e.g., "Monday", "Tuesday", ... "Sunday" or "Mon", "Tue",..., "Sun"),
- text strings denoting names and/or abbreviated names (e.g., "CET", "PDT" and so on) and/or designation letters (e.g., "A", "T", and so on) of time zones, and
- text strings denoting ordinal indicators (e.g., "st", "nd" and "th").

While all of the examples provided above are in English, the variable text strings may be defined also in a similar manner in other languages. The plurality of sets of timestamps may comprise timestamps in a plurality of languages, as mentioned above.

The computing device generates, in block 203, a plurality of regular expressions based on the plurality of sets of timestamps. In general, a regular expression, shortened as regex or regexp, is a sequence of characters that specifies a search pattern in a text. A regular expression comprises or consists of constants, which denote sets of strings, and operator symbols, which denote operations over these sets. Each string of a regular expression consists of one or more characters, where each character of a string is either a regular (alphanumeric) character having a literal meaning (e.g., "a") or a metacharacter having a special meaning, e.g., "[ha]" matching either of characters "h" and "a".

An example of a metacharacter relevant in view of embodiments is "\d" which is a metacharacter which may correspond to any digits such as any integer from 0 to 9 assuming that the base 10 numeral system is employed. In the following, the use of the base 10 numeral system is assumed though the embodiments are not limited to any particular numeral system. Multiple such metacharacters may be, in some cases, denoted as "\d{*n*}" where n is the number of consecutive digits, each having any value from 0-9. Namely, in some embodiments, the generating of the plurality of regular expressions in block 203 may comprise at least replacing each digit value in the plurality of sets of timestamps with a metacharacter representing a digit having any value from 0 to 9. This results in a plurality of regular expressions where the non-digit characters are unchanged (e.g., separator characters such as "-" and strings such as "January", "Wed" or "AM") while all the digit characters have been replaced with metacharacters matching any digit. For example, the timestamp 2000-01-01 01:00.00 becomes the regular expression \d{4}-\d{2}-\d{2} \d{2}:\d{2}\.\d{2} while the timestamp Sat Feb 14 06:00:23 2010 becomes the regular expression Sat Feb \d{2} \d{2}:\d{2}:\d{2} \d{4}. It should be noted that "\." denotes here a period as "." is typically a reserved character representing any character in regular expressions. Depending on the timestamp format, making said replacement for one timestamp of that timestamp format may or may not be sufficient for enabling matching to any timestamps of the timestamp format. For example, the aforementioned regular expression \d{4}-\d{2}-\d{2} \d{2}:\d{2}\.\d{2} may provide a match to any timestamp having this timestamp format. The same does not apply for the regular expression Sat Feb \d{2} \d{2}:\d{2}:\d{2} \d{4} as, obviously, the two text strings indicating the day of the week and the month of the year are not the same for all possible timestamps having the same timestamp format. In this case, multiple regular expressions (namely at least 7 × 12 = 84 to cover all days & months) are, thus, needed for providing matches to all possible timestamps of this timestamp format. However, in some cases, combining of these individual regular expressions may be possible, as will be described below.

In some embodiments, the generating of the plurality of regular expressions in block 203 may, additionally or alternatively, comprise replacing each whitespace character (i.e., " ") in the plurality of sets of timestamps with a metacharacter representing a generalized whitespace. Namely, the generalized whitespace may correspond, e.g., to any of a space, a tab, a newline, a carriage return, a line feed, and a form feed. The metacharacter representing a generalized whitespace may be denoted, e.g., as \s. Thus, for example, the timestamp Sat Feb 14 06:00:23 2010 may become the regular expression Sat\sFeb\s\d{2} \d{2}:\d{2}:\d{2}\s\d{4}, assuming that also the digits are replaced with metacharacters as described above.

In some embodiments, the generating of the plurality of regular expressions in block 203 may, additionally or alternatively, comprise replacing each non-alphanumeric symbolic character (e.g., separator characters such as ":", "+", "," and "-") in the plurality of sets of timestamps with a metacharacter representing any non-alphanumeric symbolic character. The metacharacter representing a non-alphanumeric symbolic character may be denoted, e.g., as \W. Thus, for example, the timestamp 2000-01-01 01:00.00 may become the regular expression \d{4}\W\d{2}\W\d{2}\s\d{2}\W\d{2}\W\d{2}, assuming that also the digits and whitespaces are replaced with metacharacters as described above.

In some embodiments, the generating of the plurality of regular expressions in block 203 may, additionally or alternatively, comprise replacing each non-alphanumeric character in the plurality of sets of timestamps with a metacharacter representing any non-alphanumeric character. The difference between the set of non-alphanumeric characters or the set of non-alphanumeric symbolic characters is that the former set comprises also whitespace characters.

The computing device obtains, in block 204, unstructured text data. It is assumed here that the unstructured text data comprises or consists of one or more timestamps. The unstructured text data may correspond to one or more strings. In general, unstructured data may be defined as data which has an internal structure but does not contain or use a pre-defined data model or schema. Thus, unstructured data is data which has not been tokenized (i.e., it has not been analyzed so as to distinguish the different units of time from each other). Unstructured data may be raw data (i.e., data which has not undergone any automatic and/or manual processing steps but has been received directly from a data source). The unstructured text data obtained in block 204 may comprise one or more data rows.

In some embodiments, the unstructured text data obtained in block 204 may correspond to an unstructured section of semi-structured data such as an unstructured section of a Hypertext Markup Language (HTML) document. The unstructured section may comprise one or more data rows.

The unstructured text data may be received from one or more data source devices via a communications network (or link), as discussed in connection with Figure 1.

In some embodiments, the unstructured text data corresponds audio playlist data comprising, for each audio track defined in the audio playlist data, a name of an artist and a title of an audio track and, for at least one audio track defined in the audio playlist data, a timestamp. Specifically, the audio playlist data may be formed of one or more (audio track -specific) data rows each of which comprises at least a name of an artist of the audio track and a title of the audio track and possibly a timestamp.

The computing device identifies, in block 205, one or more timestamps in the unstructured text data by searching for matches to the plurality of regular expressions in the unstructured text data. In other words, the computing devices a regular expression of the plurality of the generated regular expressions, tries to find matches to the regular expression from the unstructured text data and then repeats these two steps until all of the plurality of generated expressions have been covered. This process may be performed per data row in the unstructured text data.

Actions pertaining to block 205 of Figure 2 may be repeated every time new unstructured text data is received in block 204 without having to repeat the initial steps 201 to 203 (as indicated by the arrow connecting block 205 back to block 204).

While in Figure 2 it is assumed that one or more timestamps are identified in block 205, it may, obviously, also occur that some of the unstructured text data obtained in block 204 comprises no timestamps and thus no timestamps are identified in block 205.

In some embodiments, the computing device may store the one or more timestamps identified in block 205, optionally along with associated unstructured text data, to a database. The database may be an external or internal database of the computing device. By repeating blocks 204, 205 and the storing for multiple different pieces of unstructured text data a collection of timestamp information may be gathered.

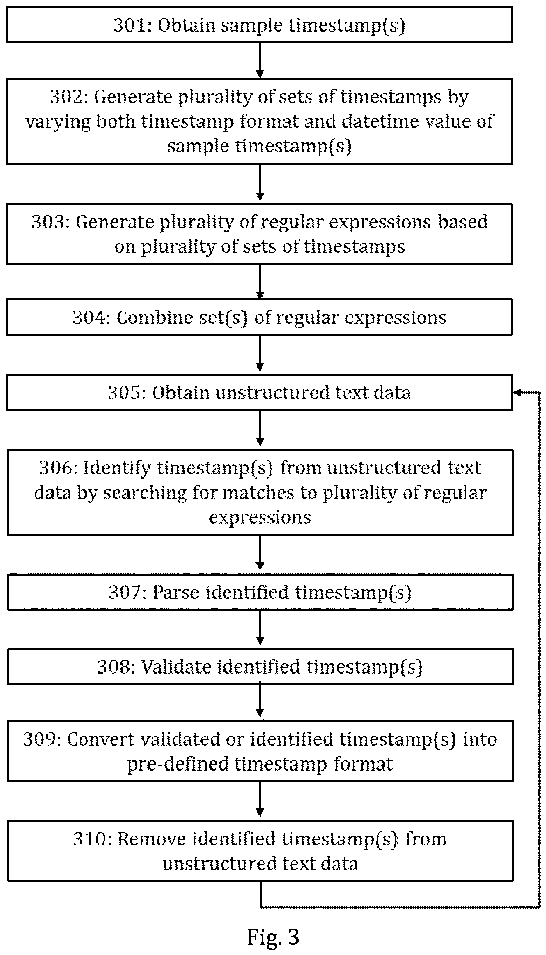

Figure 3 illustrates a process according to an embodiment for identification of timestamp(s) from unstructured text data and further for performing one or more actions based on the identified timestamp(s). The illustrated process may be performed by a computing device such as the computing device 101 of Figure 1.

The initial actions described in Figure 3 with blocks 301 to 303 may correspond fully to actions described above in connection with blocks 201 to 203 of Figure 2. The description of these initial actions is not repeated here for brevity.

Following the generation of the plurality of regular expressions in block 303 (e.g., by replacing digits and/or non-alphanumeric symbolic characters and/or whitespaces with metacharacters, as described above), the computing device combines, in block 304, one or more sets of one or more generated regular expressions so as to reduce the number of the plurality of regular expressions. Any of the following actions may be carried out specifically using this reduced set of regular expressions.

The combining in block 304 may comprise, for example, forming new combined regular expressions by introducing new (combined) metacharacters for encompassing the variations in sets of (similar) regular expressions. For example, the regular expressions \d{4}\W\d{2}\W\d{2}\s\d{2}\W\d{2}\W\d{2} and \d{4}\W\d{2}\W\d{2}\s\d{2}h\d{2}\W\d{2} may be combined into a combined regular expression \d{4}\W\d{2}\W\d{2}\s\d{2}(\W+h)\d{2}\W\d{2}, where (\W+h) is a combined metacharacter representing any non-alphanumeric symbolic character (e.g., ":") or the lower-case letter "h".

The combining in block 304 may, additionally or alternatively, comprise removing any redundant regular expressions (i.e., removing any repetitions of the same regular expression). This may be thought of as combining the regular expressions having the same form into a single combined regular expression.

The combining step of block 304 may be considered optional.

Then, the computing device obtains, in block 305, unstructured text data and identifies, in block 306, one or more timestamps from the unstructured text data by searching for matches to the plurality of regular expressions (following the reduced set resulting from the combining in block 304) from the unstructured text data. The actions pertaining to blocks 305, 306 may correspond to actions described above for blocks 204, 205 of Figure 2, apart from the fact, in this case, the number of the plurality of regular expressions has been reduced as described above. The combining of the regular expressions in block 304 serves to make the identification step of block 306 less computationally demanding as fewer regular expressions need to be compared against the unstructured text data.

Following the identification of one or more timestamps in block 306, the computing device may perform one or more actions based on the one or more timestamps. Figure 3 illustrates specifically an ambitious embodiment where multiple actions are performed.

The computing device parses, in block 307, the one or more timestamps for extracting time and date information. For example, based on the timestamp 2000-01-01 01:00.00, the computing device may determine that the values for the year, day, hour, minutes and seconds are 2000, 1, 1, 1, 0 and 0, respectively. The time and date information may comprise, in some case, time zone information.

It should be noted that the process of Figure 2 finds timestamp matches also in the case that the timestamp corresponds to a non-existing date and/or time. For example, the timestamp 2000-41-56 26:99.27 is a perfectly valid timestamp in view of the process of Figure 2 even though the months, days, hours and minutes have clearly invalid values. To overcome this potential problem, the computing device confirms, in block 308, validity of the one or more timestamps by determining that the one or more timestamps correspond to a valid time, a valid date and/or a valid time and date. The step of confirming the validity of the one or more timestamps in block 308 may be based specifically on the time and date information derived in block 307. The computing device may check in block 308 that the values for the units of time defined in the one or more timestamps correspond to an actual time and/or date. For example, it may be checked that the value for a month of the year has an integer value from 1 to 12, that the value for a day of the month is a positive integer which does not exceed the number of days in the given month and so on.

The computing device converts, in block 309, validated or identified timestamp(s) into a pre-defined timestamp format. The pre-defined timestamp format may be a standardized timestamp format or a custom timestamp format. In some embodiments, the conversion in block 309 may be carried out specifically based on the date and time information derived in block 307.

Finally, the computing device removes, in block 310, the one or more timestamps from the unstructured text data. In other words, the computing device performs data clean-up for the unstructured text data by removing the one or more timestamps.

In some more general embodiments, only one, two, three or four of the four actions described in connection with blocks 307 to 310, respectively, may be carried out by the computing device. In other words, any of blocks 307 to 310 may be omitted from Figure 3 in some embodiments. For example, the removal of the one or more timestamps may be not at all desirable in some applications while, in other applications (such as the application relating to online radio station playlists described above), the possibility for removing the one or more timestamps from the unstructured text data is the main reason for identifying them in the first place.

In an embodiment, one of blocks 309, 310 may be omitted from Figure 3. In the latter case, the conversion in block 309 may be performed for the one or more identified timestamp.

In an embodiment, block 308 and one of blocks 309, 310 may be omitted from Figure 3 (in the latter case, the conversion in block 309 may be performed for identified timestamp(s).

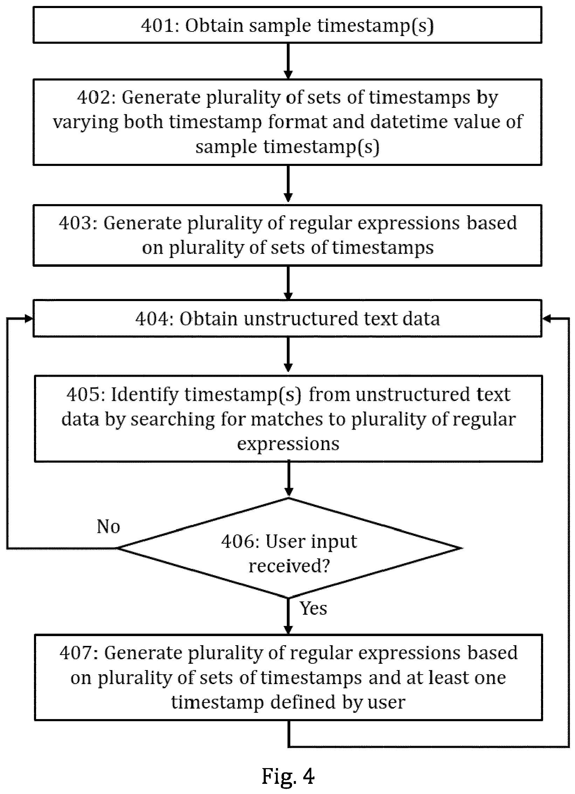

In real external nonstructured text data, any type of timestamp may, in principle, occur which also includes custom timestamp formats. Detection of custom timestamp formats may be challenging, especially if they deviate considerably from any known timestamp formats. Figure 4 illustrates a process according to an embodiment for identification of one or more timestamps from unstructured text data in a way which overcomes this problem. The illustrated process may be performed by a computing device such as the computing device 101 of Figure 1.

The initial actions described in Figure 4 with blocks 401 to 405 may correspond fully to actions described above in connection with blocks 201 to 205 of Figure 2. The description of these initial actions is not repeated here for brevity. It should be noted that, in some embodiments, one or more additional features described in connection with Figure 3 may also be combined with the process of Figure 4.

To enable improved handling of custom timestamp formats, the process of Figure 4 provides a new functionality which is based on taking advantage of user-defined timestamps. Namely, the computing device determines, in block 406, whether or not a user input defining at least one timestamp having at least one timestamp format not corresponding fully to any of the plurality of timestamp formats of the plurality of sets of timestamps generated in block 402 is received.

As long as no such user input defining said at least one timestamp is received in block 406, the process of Figure 4 may proceed as described in connection with Figure 2.

On the other hand, if such a user input defining said at least one timestamp is received in block 406, the computing device (re)generates, in block 407, a plurality of regular expressions based on the plurality of sets of timestamps and the at least one time stamp received from a user in block 406. Now, the plurality of regular expressions comprise also one or more regular expressions enabling matching the at least one timestamp defined by the user as well as any other timestamps having the same timestamp format. Thus, the identifying of one or more timestamps in block 405 is performed based on the regenerated plurality of regular expressions.

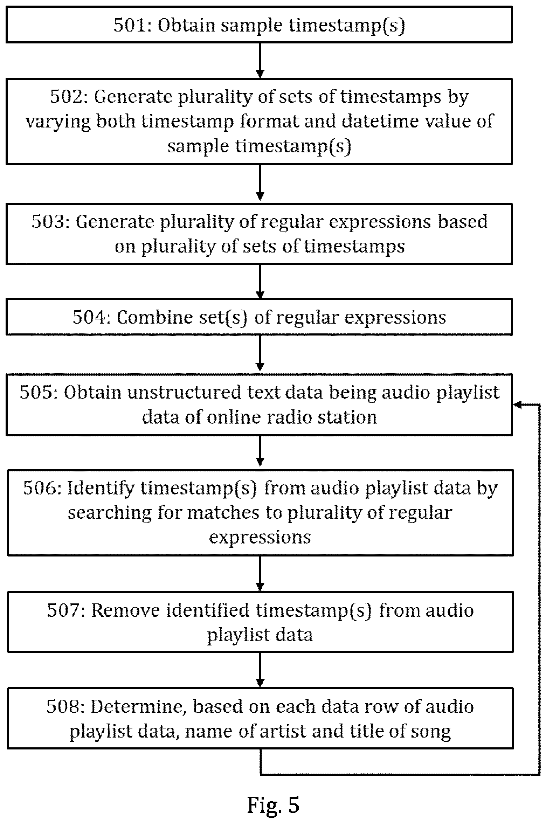

Figure 5 illustrates a process according to an embodiment for identification of one or more timestamp from unstructured text data being specifically audio playlist data of an online radio station (or other entity playing audio tracks online) and for processing said unstructured text data in a manner typical to this particular application. The illustrated process may be performed by a computing device such as the computing device 101 of Figure 1.

The initial actions described in Figure 5 with blocks 501 to 506 may correspond fully to actions described above in connection with blocks 201 to 206 of Figure 2. The description of these initial actions is not repeated here for brevity.

Here, it is, however, assumed, as indicated above, that the unstructured text data obtained in block 505 is unstructured audio playlist data of an online radio station. Specifically, the unstructured text data corresponds audio playlist data comprising, for each audio track such as a song or other piece of music, defined in the audio playlist data, a name of an artist of an audio track and a title of the audio track and, for at least one audio track defined in the audio playlist data, a timestamp. The audio playlist data may be formed of one or more audio track - specific data rows each of which comprises a name of an artist of the audio track and a title of the audio track and possibly a timestamp.

Following the identifying of the one or more timestamps in block 506, the computing device removes, in block 507, the one or more timestamps from the audio playlist data. As a result, the audio playlist data may be rendered clean of timestamps.

Following the step of removing the one or more timestamps in block 507, the computing device determines, in block 508, separately based on each data row of the audio playlist data, the name of the artist of the audio track and the title of the audio track. As the data rows have been cleaned-up and thus are assumed to comprise only the wanted information, the determining of the name of the artist and the title of the audio track may be carried in a straightforward manner.

In some embodiments, the block 508 may be omitted.

In some embodiments, the use of user-defined timestamps as described in connection with blocks 406, 407 of Figure 4 may be combined with the embodiment of Figure 5.

The blocks, related functions, and information exchanges described above by means of Figures 2 to 5 are in no absolute chronological order, and some of them may be performed simultaneously or in an order differing from the given one. Other functions can also be executed between them or within them, and other information may be sent and/or received, and/or other map-ping rules applied. Some of the blocks or part of the blocks or one or more pieces of information can also be left out or replaced by a corresponding block or part of the block or one or more pieces of information.

As used in this application, the term "circuitry" may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of "circuitry" applies to all uses of this term in this application, including any claims. As a further example, as used in this application, the term "circuitry" also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Figures 2 to 5 may be carried out by an apparatus (e.g., computing device or a computing system) comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Figures 2 to 5 or operations thereof.

Embodiments as described may also be carried out in the form of a computer process defined by a computer program or portions thereof. Embodiments of the methods described in connection with Figures 2 to 5 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a per-son skilled in the art that the described embodiments may, but are not required to, be combined with other embodiments in various ways.

## Claims

1. A computer-implemented method comprising:
obtaining at least one sample timestamp;
generating a plurality of sets of timestamps by varying both a timestamp format and a datetime value of the at least one sample timestamp, wherein each set of the plurality of sets of timestamps has a different timestamp format and comprises timestamps corresponding to a plurality of different datetime values;
generating a plurality of regular expressions based on the plurality of sets of timestamps;
obtaining unstructured text data; and
identifying one or more timestamps in the unstructured text data by searching for matches to the plurality of regular expressions in the unstructured text data.

2. The computer-implemented method of claim 1, wherein the varying of the datetime value of the at least one sample timestamp so as to implement timestamps corresponding to the plurality of different datetime values comprises at least
varying a number of digits usable for denoting each non-zero-padded digit-based unit of time defined in a timestamp format and
varying any variable text strings includable in a timestamp format.

3. The computer-implemented method of claim 2, wherein non-zero-padded digit-based units of time with variable number of digits includable in a time stamp format comprise:
pre-defined fractions of a second defined using one or more digits,
seconds of a minute defined using one to two digits,
minutes of an hour defined using one to two digits,
hours of a day using a 12-hour or 24-hour clock defined using one to two digits,
a day of a month defined using one to two digits,
a month of a year defined using one to two digits and/or
a year defined using one to four digits.

4. The computer-implemented method of claim 2 or 3, wherein variable text strings includable within a timestamp format comprise the following:
text strings corresponding to ante meridiem, a.m., and post meridiem, p.m., indications of a 12-hour clock,
text strings denoting names and/or abbreviated names of months,
text strings denoting names and/or abbreviated names of days of a week,
text strings denoting names and/or abbreviated names and/or designation letters of time zones and/or
text strings denoting ordinal indicators.

5. The computer-implemented method according to any preceding claim, wherein the generating of the plurality of regular expressions comprises:
replacing each digit value in the plurality of sets of timestamps with a metacharacter representing a digit having any value; and/or
replacing each non-alphanumeric symbolic character in the plurality of sets of timestamps with a metacharacter representing any non-alphanumeric symbolic character; and/or
replacing each whitespace character in the plurality of sets of timestamps with a metacharacter representing a generalized whitespace.

6. The computer-implemented method of claim 5, further comprising:
combining, following the generating of the plurality of regular expressions, one or more sets of one or more generated regular expressions so as to reduce the number of the plurality of regular expressions.

7. The computer-implemented method according to any preceding claim, wherein the varying of the timestamp format of the at least one sample timestamp so as to implement the plurality of timestamp formats defined for the plurality of sets of timestamps comprises varying one or more properties of the timestamp format of the at least one sample timestamp selected from the following set of properties or a subset thereof:
units of time included in the timestamp format,
accuracy of units of time included in the timestamp format,
relative order of different units of time included in the timestamp format,
the number of separator characters for separating different units of time used in the timestamp format,
types of separator character or characters used in the timestamp format,
use of a 12-hour or 24-hour clock,
use of zero padding for keeping the number of digits reserved for a particular unit of time constant,
inclusion of a time zone notation in the timestamp format,
a form of the time zone notation,
inclusion of an ordinal indicator for a day of the month,
indicating a month as one or more digits or as a text string,
indicating a month as a text string for a name of the month or a text string for an abbreviated name of the month,
indicating a day of a week as one or more digits or as a text string,
indicating a day of a week as a text string for a name of the day of the week or a text string for an abbreviated name of the day of the week,
capitalization of text strings included in the timestamp format and
language of the timestamp format.

8. The computer-implemented method according to any preceding claim, wherein the generating of the plurality of regular expressions further comprises:
confirming validity of the one or more timestamps by determining that the one or more timestamps correspond to a valid time, a valid date and/or a valid time and date.

9. The computer-implemented method of any preceding claim, further comprising:
removing the one or more timestamps from the unstructured text data.

10. The computer-implemented method according to any preceding claim, wherein the unstructured text data corresponds audio playlist data comprising, for each audio track defined in the audio playlist data, a name of an artist and a title of an audio track and, for at least one audio track defined in the audio playlist data, a timestamp.

11. The computer-implemented method of any preceding claim, further comprising:
parsing the one or more timestamps for extracting time and date information.

12. The computer-implemented method according to any preceding claim, further comprising:
receiving a user input defining at least one timestamp having a timestamp format not corresponding to any of the plurality of timestamp formats; and
regenerating the plurality of regular expressions based on the plurality of sets of timestamps and the at least one timestamp received from a user.

13. The computer-implemented method according to any preceding claim, wherein the generating of the plurality of sets of timestamps is performed further based on a timestamp or datetime library supporting a plurality of timestamp formats and a plurality of localisations.

14. A computing device comprising means for performing the computer-implemented method according to any preceding claim.

15. A non-transitory computer readable media having stored thereon instructions that, when executed by a computing device, cause the computing device to perform the computer-implemented method according to any of claims 1 to 13.
